# EUROPEAN PATENT SPECIFICATION

(11) **EP 2 918 542 B1**
(45) Date of publication and mention of the grant of the patent: **10.01.2018**
(21) Application number: 13853968.9
(22) Date of filing: 07.11.2013
(51) Int. Cl.: B67D 1/08, B67D 7/80, C02F 1/461, A47J 31/00, B67D 1/07, C02F 1/467

(54) **BEVERAGE SUPPLY DEVICE**
VORRICHTUNG ZUR GETRÄNKEBEREITSTELLUNG
DISPOSITIF DE FOURNITURE DE BOISSON

(30) Priority: 07.11.2012 KR 20120125218
(43) Date of publication of application: 16.09.2015
(73) Proprietor: Paino Inc., Seoul 137-890 (KR); Kim, Seong Tae, Seoul 134-885 (KR)
(72) Inventor: KIM, Seong Tae, Seoul 134-885 (KR)
(74) Representative: Davies, Gregory Mark
(86) International application number: PCT/KR2013/010061
(87) International publication number: WO 2014/073874

(56) References cited:
- WO-A1-2009/028845
- JP-A- 2000 254 649
- JP-A- 2000 254 649
- JP-A- 2004 003 850
- JP-A- 2005 153 954
- JP-A- 2005 153 954
- KR-A- 20100 129 912
- KR-B1- 100 564 654

## Description

### BACKGROUND

### FIELD OF THE DISCLOSURE

The present disclosure relates to a drink supply apparatus where a sterilization module configured to sterilize cooling water and a flow path for drink water is integrated therewith.

### DISCUSSION OF THE RELATED ART

In general, draft beer may be supplied to a drinker by being optimized to a temperature and a carbonic acid density at which the drinker can feel the most of refreshment, whereby each of a beer supply module and a carbon acid supply module is separately formed and both connected to a drink supply apparatus being installed with a cooling device. Particularly, 4 °C is known as the best temperature for the draft beer drinkers to feel refreshment. Thus, various shapes and/or types of drink cooling devices for supplying draft beer at the temperature of 4 °C are currently being used.

However, scales may be generated in the flow path for cooling or supplying drink, when using the drink supply device with the drink such as beer or wine, which contains other additional materials besides water and alcohol, for a long time. Germs proliferated in such scales may cause great damage to drinkers' health.

In order to solve out such problem, the applicant of the present disclosure proposed a structure of Korean Patent Publication No. 10-2010-0129912, "Apparatus Supplying Beverage For Washing Line". In the above published document, a structure to clean and sterilize a drink supply line using sterilizing water by electrolyzing original water to form ozone, and by forming the ozone as the sterilizing water was proposed.

However, according to such structure, the drink supply line may be easily cleaned, but germ proliferation in the cooling water cannot be prevented. In addition, when forming ozone by electrolyzing original water, the amount of current applied to the electrolyzing module should be changed according to the temperature of the original water. However, the current applied to the electrolyzing module is generally set to have a fixed amount, and the temperature of the original water varies according to seasons when connecting and using the waterworks as the original water to be electrolyzed. Therefore, there is a problem that the concentration of ozone generated in the sterilizing water may vary according to seasons.

Meanwhile JP 2000 254649 A discloses a drink supply apparatus using chilled chlorine water and WO 2009/028845 A1 discloses a device for cleaning drink supply lines using an ozone generator.

### SUMMARY OF THE DISCLOSURE

One purpose of the present disclosure is to provide a drink supply apparatus having a structure capable of preventing spoilage of cooling water stored in the drink supply apparatus and generation of scales.

In addition, another purpose of the present disclosure is to provide a drink supply apparatus capable of sterilizing a drink supply line disposed therein, by embedding a sterilizing water generation device without requiring a separate device for cleaning the drink supply line.

In an aspect of the present disclosure, there is provided a drink supply apparatus comprising: a drink cooling unit configured to store cooling water inside thereof; a cooling unit housing disposed on a lower portion of the drink cooling unit, wherein a cooling device is installed within the housing; a drink storage configured to store a plurality of drink supply cans; a sterilizing module formed in a dry area disposed on an upper portion of the drink cooling unit, wherein each of the drink cooling unit, the cooling unit housing, the drink storage, and the sterilizing module is installed by having an independent structure detachable from one another, and wherein the sterilizing module includes: an electrolyzing device; an original water supply port configured to supply original water to the electrolyzing device; an original water cooling pipe positioned in the cooling water of the drink cooling unit made of a metallic material in a shape of coil, having one end thereof connected to the original water supply port and another end thereof connected to the electrolyzing device; a sterilizing water supply pipe configured to eject sterilizing water generated in the electrolyzing device; a valve member configured to branch into a first flow path and a second flow path, one end of the first flow path connected to the sterilizing water supply pipe and another end of the first flow path connected to a sterilizing water outlet configured to inject sterilizing water into the drink cooling unit for use as cooling water, and the second flow path connected to a sterilizing water supply port suitable for connection to a drink supply pipe.

In some exemplary embodiments of the present disclosure, the drink cooling unit may include: a cock module configured to supply drink provided in the drink supply can; a thermal
insulation member interposed between an internal chamber configured to store the cooling water therein and an external case positioned outside of the internal chamber; a water level sensor configured to sense water level of the cooling water; and a drain port configured to eject the cooling water, wherein the sterilizing water supply port and the drain port may be open-controlled using a control signal from a controller, and a lower space of the water level sensor may be always filled with cooling water.

In some exemplary embodiment of the present disclosure, the drink cooling unit may include: a drink supply pipe made of a metallic material in a shape of coil, having one end thereof connected to the cock module and another end thereof connected to at least one of the plurality of drink supply cans; a first refrigerant pipe in a shape of coil, and configured to cool the cooling water; and a second refrigerant pipe in a shape of straight pipe, and connected to the first refrigerant pipe, wherein the drink supply pipe and the original water cooling pipe may be disposed on either one of an internal or an external side of the first and the second refrigerant pipes.

In some exemplary embodiments of the present disclosure, the sterilizing water supply port may be disposed by being exposed on an external side of the sterilizing module.

In some exemplary embodiments of the present disclosure, the sterilizing water supply port may be formed in a same shape as a shape of an inlet of the drink supply can stored in the drink storage.

In some exemplary embodiments of the present disclosure, the drink supply pipe may be connected to the drink supply can using a drink supply tube made of a flexible material and a dispenser head coupled to an inlet of the drink supply can.

In some exemplary embodiments of the present disclosure, the drink supply tube may be formed in a shape of spring tube extendable towards a length direction.

In some exemplary embodiments of the present disclosure, the drink storage may further include a cover unit configured to enable the drink supply tube and the dispenser head taken out.

In some exemplary embodiment of the present disclosure, the cooling water may be formed of ozone sterilizing water generated in the sterilizing module.

In some exemplary embodiments of the present disclosure, the electrolyzing device may include an electrode module, and wherein the electrode module may include: a positive electrode configured to initiate an electrolysis response in water; a negative electrode configured to initiate an electrolysis response in water, by being disposed to be opposite to the positive electrode; a solid polymer electrolyte membrane configured to deliver hydrogen ions generated by the electrolysis response between the positive electrode and the negative electrode; and an auxiliary electrode configured to reduce generation of scale on a surface of the negative electrode, by being disposed between the negative electrode and the solid polymer electrolyte membrane, and by passing hydrogen ions generated at the positive electrode to the negative electrode and generating scales generated whereby OH-ions generated at the negative electrode react with divalent positive ions on a surface of the auxiliary electrode.

According to an exemplary embodiment of the present disclosure, users of the drink supply apparatus can easily sterilize the internal flow path, because a sterilizing module capable of generating sterilizing water is provided inside of the drink supply apparatus, without requiring a separate sterilizing unit.

In addition, proliferation of germs can be prevented even when the drink is stored for a long time, because the cooling water stored in the drink supply apparatus may be provided as the sterilizing water.

### BRIEF DESCRIPTION OF THE DRAWINGS

FIG. 1 is a schematic view illustrating a structure of a drink supply apparatus according to an exemplary embodiment of the present disclosure.
FIG. 2 is a view illustrating a status where a flow path for drink supply is connected to a sterilization port in order to sterilize the flow path of a drink supply apparatus according to an exemplary embodiment of the present disclosure.

### DETAILED DESCRIPTION

Hereinafter, exemplary embodiments of the present disclosure will be described with reference to the enclosed drawings.

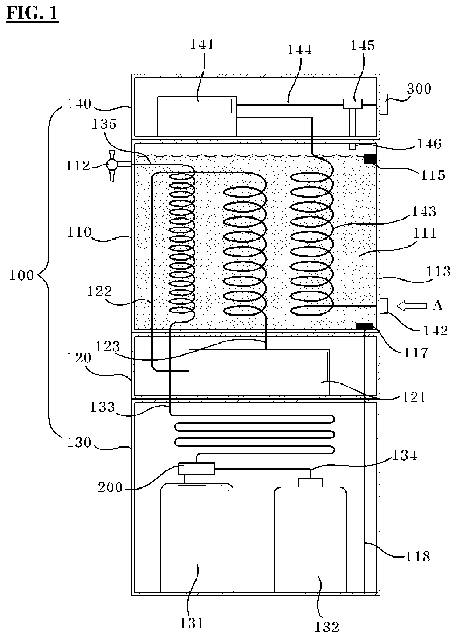

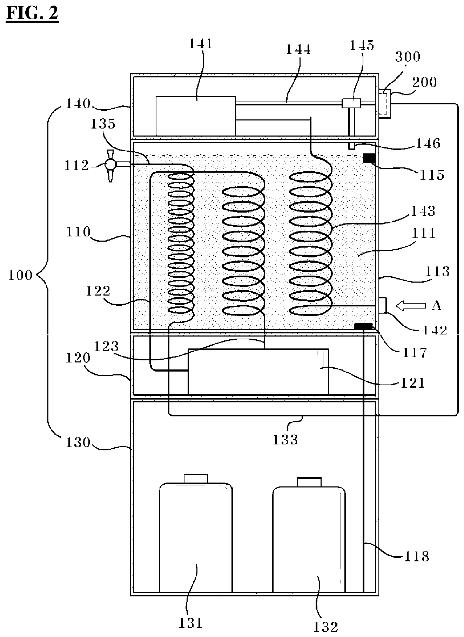

FIG. 1 is a schematic view illustrating a structure of a drink supply apparatus according to an exemplary embodiment of the present disclosure; and FIG. 2 is a view illustrating a status where a flow path for drink supply is connected to a sterilization port in order to sterilize the flow path of a drink supply apparatus according to an exemplary embodiment of the present disclosure.

A drink supply apparatus (100) according to an exemplary embodiment of the present disclosure includes a drink cooling unit (110), a cooling unit housing (120), a drink storage (130) and a sterilizing module (140). The elements described in the above may form a single drink supply apparatus (100) whereby independent structures divided by partitions in a single body are connected detachably from one another.

The drink cooling unit (110) is formed as a structure filled with cooling water (111) inside thereof. A cock module (112) may be installed on a front of the drink cooling unit (110). Here, a thermal insulation member (113) may be interposed between an internal chamber and an external case so that the drink cooling unit (110) can maintain a constant temperature of the cooling water. In addition, a water level sensor (115) may be installed in an internal space of the drink cooling unit (110). Water level of the cooling water (111) may be maintained constantly by controlling a sterilizing water supply port (146) and a drain port (117) (to be described hereinafter), according to a sense signal of the water level sensor (115).

Therefore, a lower space of the water level sensor (115) may be maintained to be always filled with the cooling water (111). The drain port (117) may be connected to a drain pipe (118) connected towards a bottom surface of the apparatus, to discharge the cooling water (111) to a drain, etc.

The cooling unit housing (120) is installed with a cooling device (121) inside thereof. The structure of the cooling device (121) may be formed of a compressor, an evaporator, and a refrigerant pipe which are known in the art. As illustrated in FIGS. 1 and 2, a first and a second refrigerant pipes (122)(123) may formed in a shape of coil on the cooling device (121), in order to maintain a constant temperature of the cooling water (111). According to an exemplary embodiment of the present disclosure, the temperature of the cooling water (111) may be maintained as 0°C. A drink supply pipe (135) (to be described hereinafter) may be disposed in a shape of coil on either one of a position adjacent to the first and the second refrigerant pipes (122)(123) or an internal or an external side of the first and the second refrigerant pipes (122)(123).

The first and the second refrigerant pipes (122)(123) are illustrated as being distinctive from the drink supply pipe (135) and the original water cooling pipe (143) (to be described hereinafter) in drawings, in order to facilitate understanding of the present disclosure. However, in reality, the first and the second refrigerant pipes (122)(123) may be wound in a shape of coil along an inner circumference of the drink cooling unit (110) so as to warp both of the drink supply pipe (135) and the original water cooling pipe (143), and may be formed to have a particular volume by being modularized in order to facilitate maintenance.

Ability to control temperature of the first and the second refrigerant pipes (122)(123) may be determined according to an extent of coil winding and circumferences of the first and the second refrigerant pipes (122)(123). In particular, the circumferences and the number of windings may be adjusted according to kinds of drinks passing through the drink supply pipe (135).

The drink storage (130) may include a first supply can (131) containing drink such as beer or wine and a second supply can (132) containing carbonic acid. Here, the drink or gas stored in the first and the second supply cans (131)(132) may vary according to requirements. For example, wine may be stored in one of the first and the second supply cans (131)(132), when wine is provided as the drink. In another example, raw liquid of beer and carbonic acid gas may be stored in each of the first and the second supply cans (131)(132) respectively, when beer is provided as the drink.

In addition, the first and the second supply cans (131)(132) may be provided one by one, but not limited hereto. Thus, the number of the supply cans may be increased according to requirements. That is, as the size of the drink supply apparatus gets bigger, the number of supply cans capable of the drink may be increased. In addition, a plurality of supply cans may be provided by kinds of drinks, when a various kinds of drinks are required to be provided.

Meanwhile, the first and the second supply cans (131)(132) may be connected to a normalized dispenser head (200). Here, the dispenser head (200) may be formed by being adjusted to a standard of each maker.

A drink supply tube (133) made of a flexible material may be connected to the dispenser head (200). Here, the drink supply tube (133) may be formed of an antibacterial material. In addition, the drink supply tube (133) may be formed as having a length to an extent where a sterilizing water supply port (300) (to be described hereinafter) can be connected to the dispenser head (200).

According to an exemplary embodiment of the present disclosure, the drink supply tube (133) may be formed in a shape of coil so as to be freely extensible. Otherwise, the drink supply tube (130) may be formed in a shape of general pipe so as to be stored by being rolled in the drink storage (130).

The drink supply pipe (135) may be separately disposed on a position adjacent to the first and the second refrigerant pipes (122)(123) as illustrated in FIGS. 1 and 2. Otherwise, the drink supply pipe (135) may be disposed on an internal or an external side of the first and the second refrigerant pipes (122)(123).

The drink supply pipe (135) may be made of a metallic material having high heat conduction quality. One end of the drink supply pipe (135) may be connected to a cock module (112) for supplying drink, and the other end of the drink supply pipe (135) may be connected to the drink supply tube (133).

A sterilizing module (140) is installed in an upper portion of the drink cooling unit (110), and is disposed in a dry area where components such as a control circuit and a power supply (not illustrated in the drawings) are to be installed. The sterilizing module (140) includes an electrolyzing device (141), an original water supply port (142), an original water cooling pipe (143), a sterilizing water supply pipe (144), a valve member (145), a sterilizing water outlet (146), and a sterilizing water supply port (300).

The electrolyzing device (141) may be provided as the apparatus disclosed in Korean Patent No. 10-564654. An electrode module may be provided in the electrolyzing device (141). The electrode module may include: a positive electrode configured to initiate an electrolysis response in water; a negative electrode configured to initiate an electrolysis response in water, by being disposed to be opposite to the positive electrode; a solid polymer electrolyte membrane configured to deliver hydrogen ions generated by the electrolysis response between the positive electrode and the negative electrode; and an auxiliary electrode configured to reduce generation of scale on a surface of the negative electrode, by being disposed between the negative electrode and the solid polymer electrolyte membrane, and by passing hydrogen ions generated at the positive electrode to the negative electrode and generating scales generated whereby OH-ions generated at the negative electrode react with divalent positive ions on a surface of the auxiliary electrode.

The original water supply port (142) may be provided as being able to be connected to tap water, or may be provided as being able to be supplied with separate purified water. As illustrated in the drawings, the original water supply port (142) may be disposed on a lower portion of the drink cooling unit (110).

The original water cooling pipe (143) is made of a metallic material having high heat conduction quality by being provided in a shape of coil. The original water cooling pipe (143) may be disposed on a position not overlapping with the first and the second refrigerant pipes (122)(123), as illustrated in the drawings. Otherwise, the original water cooling pipe (143) may be disposed inside of the first and the second refrigerant pipes (122)(123) along with the drink supply pipe (135).

The original water cooling pipe (143) may maintain a constant temperature of water supplied to the electrolyzing device (141), by cooling tap water inflowing through the original water supply port (142). According to such structure, the temperature supplied to the electrolyzing device (141) may be maintained constantly, even when the temperature of inflowing original water varies according to the four seasons. Therefore, ozone concentration in the sterilizing water may be maintained constantly, even when an optimally set current for the temperature of inflowing original water is constantly applied to the electrolyzing device (141).

The sterilizing water supply pipe (144) is provided in order to supply ozone sterilizing water generated in the electrolyzing device (141). As illustrated in the drawings, the sterilizing water supply pipe (144) is connected to a valve member (145). Opening of the valve member (145) may be controlled by the controller (not illustrated in the drawings). A first flow path of the valve member (145) is connected to the sterilizing water outlet (146), and a second flow path of the valve member (145) is connected to the sterilizing water supply port (300). Therefore, the sterilizing water may be supplied by opening the sterilizing water outlet (146) when injecting the sterilizing water into the drink cooling unit (110) for the use of cooling water (111). In addition, the sterilizing water may be supplied to the sterilizing water supply port (300) by closing the first flow path and opening the second flow path, when sterilizing the flow path where the drink is supplied. As described in the above, proliferation of germs may be prevented by using the sterilizing water generated in the electrolyzing device (141) as the cooling water (111). In particular, spoilage of the cooling water (111) at room temperature may be prevented while the cooling device (121) is not driven.

Hereinafter, a method for sterilizing a flow path of a drink supply apparatus according to an exemplary embodiment of the present disclosure will be described with reference to FIG. 2.

As illustrated in FIG. 2, the dispenser head (200) to which drink supply tube (133) is to be connected may be taken out of the drink supply apparatus and may be connected to the sterilizing water supply port (300), when the internal flow path of the drink supply apparatus is required to be sterilized after being used for a certain period of time.

Here, the dispenser head (200) and the sterilizing water supply port (300) may be formed as standardized products compatible to each other. That is, the shape of the sterilizing water (300) may be formed the same as the shape of the connection unit of the first and the second supply cans (131)(132).

Once the dispenser head (200) is connected to the sterilizing water supply port (300), the electrolyzing device (141) may be initiated by a predetermined control signal (such as turning on a sterilizing mode switch) to turn the original water into ozone sterilizing water. The sterilizing water may remove germs and scales in the flow path while passing through the drink supply pipe (135) via the drink supply tube (133). Here, the cock module (112) may be opened to discharge the sterilizing water.

The operation of the electrolyzing device (141) may be stopped, when the flow path has been sterilized using ozone sterilizing water for a certain period of time. Then, smell of the ozone may be deodorized by passing general tap water not including ozone through the flow path. Here, although not illustrated in the drawings, an ozone removal filter may be disposed may be disposed between the valve member (145). Once the sterilization of flow paths in the drink supply tube (133) and the drink supply pipe (135) is completed according to the process described in the above, the dispenser head (200) may be connected to the first and the second supply cans (131)(132) to prepare for supplying drink.

Meanwhile, the sterilizing water (111) may be sterilized, by injecting sterilizing water to the sterilizing water (111) by intervals of certain period. That is, while driving the electrolyzing device (141) using the predetermined control signal of the controller by intervals of a day or days, and while supplying ozone sterilizing water into the cooling water (111), the cooling water (111), of which amount is corresponding to the amount of the sterilizing water supplied by the sense signal of the water level sensor (115), may be discharged to outside of the drink supply apparatus.

According to an exemplary embodiment of the present disclosure, a sterilizing unit generating ozone sterilizing water and a drink supply apparatus may be provided integrally in a single body without requiring a separate sterilizing device, because the sterilizing module (140) may be formed in a dry area where a controller and a power supply are generally installed.

In addition, ozone sterilizing water may be provided as the cooling water (111) and the sterilizing water may be diluted by intervals of certain period to prevent spoilage of the cooling water (111) and generation of stench. Thereby, proliferation of germs in the cooling water (111) may be prevented even when users stop operation of the drink supply apparatus for a certain period of time for the purpose such as power saving, or when the drink supply apparatus has been used for a long time.

The embodiments described in the above and illustrated in drawings shall not be construed as limiting the technical spirit of the present disclosure. The protective scope of the present disclosure is to be limited only by the limitations disclosed in the claims, and a person skilled in the art of the present disclosure would be able to modify or transform the technique of the present disclosure in various ways. Therefore, such modification or transformation shall be construed as being included within the protective scope of the present disclosure, as long as these modification or transformation would be obvious to those who skilled in the art.

The present disclosure is a technique in relation to an apparatus for cooling beverages for drinking purpose such as beer, wine, and purified water, and for providing the cooled beverages.

## Claims

1. A drink supply apparatus (100) comprising:
a drink cooling unit (110) configured to store cooling water (111) inside thereof;
a cooling unit housing (120) disposed on a lower portion of the drink cooling unit (110), wherein a cooling device (121) is installed within the housing (120);
a drink storage (130) configured to store a plurality of drink supply cans (131, 132); a sterilizing module (140) formed in a dry area disposed on an upper portion of the drink cooling unit (110),
wherein each of the drink cooling unit (110), the cooling unit housing (120), the drink storage (130), and the sterilizing module (140) is installed by having an independent structure detachable from one another, and
wherein the sterilizing module (140) includes:
an electrolyzing device (141);
an original water supply port (142) configured to supply original water to the electrolyzing device (141);
an original water cooling pipe (143) positioned in the cooling water (111) of the drink cooling unit (110) made of a metallic material in a shape of coil, having one end thereof connected to the original water supply port (142) and another end thereof connected to the electrolyzing device (141);
a sterilizing water supply pipe (144) configured to eject sterilizing water generated in the electrolyzing device (141);
a valve member (145) configured to branch into a first flow path and a second flow path, one end of the first flow path connected to the sterilizing water supply pipe (144) and another end of the first flow path connected to a sterilizing water outlet (146) configured to inject sterilizing water into the drink cooling unit (110) for use as cooling water (111), and the second flow path connected to a sterilizing water supply port (300) suitable for connection to a drink supply pipe (135).

2. The apparatus of claim 1, wherein the drink cooling unit (110) includes:
a cock module (112) configured to supply drink provided in the drink supply can;
a thermal insulation member (113) interposed between an internal chamber configured to store the cooling water (111) therein and an external case positioned outside of the internal chamber;
a water level sensor (115) configured to sense water level of the cooling water (111);
a drain port (117) configured to eject the cooling water (111),
wherein the sterilizing water supply port (300) and the drain port (117) are open-controlled using a control signal from a controller, and a lower space of the water level sensor (115) is always filled with cooling water (111).

3. The apparatus of claim 2, wherein the drink cooling unit (110) includes:
a drink supply pipe (135) made of a metallic material in a shape of coil, having one end thereof connected to the cock module (112) and another end thereof connected to at least one of the plurality of drink supply cans;
a first refrigerant pipe (122) in a shape of coil, and configured to cool the cooling water (111); and
a second refrigerant pipe (123) in a shape of straight pipe, and connected to the first refrigerant pipe,
wherein the drink supply pipe (135)and the original water cooling pipe (143) are disposed on either one of an internal or an external side of the first and the second refrigerant pipes (122) (123).

4. The apparatus of claim 1, wherein
the sterilizing water supply port (300) is disposed by being exposed on an external side of the sterilizing module (140).

5. The apparatus of claim 4, wherein
the sterilizing water supply port (300) is formed in a same shape as a shape of an inlet of the drink supply can stored in the drink storage (130).

6. The apparatus of claim 3, wherein
the drink supply pipe (135) is connected to the drink supply can using a drink supply tube (133) made of a flexible material and a dispenser head (200) coupled to an inlet of the drink supply can.

7. The apparatus of claim 6, wherein
the drink supply tube (133) is formed in a shape of spring tube extendable towards a length direction.

8. The apparatus of claim 6, wherein
the drink storage (130) further includes a cover unit configured to enable the drink supply tube (133) and the dispenser head (200) to be taken out.

9. The apparatus of claim 1, wherein
the cooling water (111) is formed of ozone sterilizing water generated in the sterilizing module.

10. The apparatus of claim 1, wherein
the electrolyzing device (141) includes an electrode module, and
wherein the electrode module includes:
a positive electrode configured to initiate an electrolysis response in water;
a negative electrode configured to initiate an electrolysis response in water, by being disposed to be opposite to the positive electrode;
a solid polymer electrolyte membrane configured to deliver hydrogen ions generated by the electrolysis response between the positive electrode and the negative electrode; and
an auxiliary electrode configured to reduce generation of scale on a surface of the negative electrode, by being disposed between the negative electrode and the solid polymer electrolyte membrane, and by passing hydrogen ions generated at the positive electrode to the negative electrode and generating scales generated whereby OH-ions generated at the negative electrode react with divalent positive ions on a surface of the auxiliary electrode.

## Patentansprüche

1. Apparat (100) zur Getränkebereitstellung, der Folgendes umfasst:
eine Getränkekühleinheit (110), die dazu konfiguriert ist, Kühlwasser (111) in ihrem Inneren zu lagern;
ein Kühleinheitsgehäuse (120), das an einem unteren Abschnitt der Getränkekühleinheit (110) angeordnet ist, wobei eine Kühlvorrichtung (121) innerhalb des Gehäuses (120) installiert ist;
ein Getränkelager (130), das zum Lagern mehrerer Getränkebereitstellungsdosen (131, 132) konfiguriert ist;
ein Sterilisierungsmodul (140), das in einem trockenen Bereich gebildet ist, der an einem oberen Abschnitt der Getränkekühleinheit (110) angeordnet ist,
wobei die Getränkekühleinheit (110), das Kühleinheitsgehäuse (120), das Getränkelager (130) und das Sterilisierungsmodul (140) jeweils so installiert werden, dass sie eine unabhängige Struktur aufweisen, die von den anderen abtrennbar ist, und
wobei das Sterilisierungsmodul (140) Folgendes aufweist:
eine Elektrolysiervorrichtung (141);
einen Originalwasserbereitstellungsanschluss (142), der dazu konfiguriert ist, der Elektrolysiervorrichtung (141) Originalwasser bereitzustellen;
ein Originalwasserkühlrohr (143), das im Kühlwasser (111) der Getränkekühleinheit (110) angeordnet und aus einem metallischen Material in Form einer Spule hergestellt ist, deren eines Ende mit dem Originalwasserbereitstellungsanschluss (142) verbunden ist und deren anderes Ende mit der Elektrolysiervorrichtung (141) verbunden ist;
ein Sterilisierungswasserbereitstellungsrohr (144), das dazu konfiguriert ist, Sterilisierungswasser auszugeben, das in der Elektrolysiervorrichtung (141) erzeugt wird;
ein Ventilelement (145), das dazu konfiguriert ist, sich in einen ersten Strömungsweg und einen zweiten Strömungsweg zu verzweigen, wobei ein Ende des ersten Strömungswegs mit dem Sterilisierungswasserbereitstellungsrohr (144) verbunden ist und ein anderes Ende des ersten Strömungswegs mit einem Sterilisierungswasserauslass (146) verbunden ist, der dazu konfiguriert ist, Sterilisierungswasser in die Getränkekühleinheit (110) zur Verwendung als Kühlwasser (111) einzuleiten, und wobei der zweite Strömungsweg mit einem Sterilisierungswasserbereitstellungsanschluss (300) verbunden ist, der zur Verbindung mit einem Getränkebereitstellungsrohr (135) geeignet ist.

2. Apparat nach Anspruch 1, wobei die Getränkekühleinheit (110) Folgendes aufweist:
ein Zapfmodul (112), das dazu konfiguriert ist, in der Getränkebereitstellungsdose bereitgestelltes Getränk bereitzustellen;
ein thermisches Isolierelement (113), das zwischen einer internen Kammer, die zum Lagern des Kühlwassers (111) darin konfiguriert ist, und einem externen Gehäuse, das außerhalb der internen Kammer positioniert ist, angeordnet ist;
einen Wasserstandssensor (115), der dazu konfiguriert ist, den Wasserstand des Kühlwassers (111) zu erfassen;
einen Abflussanschluss (117), der dazu konfiguriert ist, das Kühlwasser (111) auszugeben,
wobei der Sterilisierungswasserbereitstellungsanschluss (300) und der Abflussanschluss (117) unter Verwendung eines Steuersignals von einer Steuerung offen angesteuert werden, und wobei ein unterer Raum des Wasserstandssensors (115) immer mit Kühlwasser (111) gefüllt ist.

3. Apparat nach Anspruch 2, wobei die Getränkekühleinheit (110) Folgendes aufweist:
ein Getränkebereitstellungsrohr (135), das aus einem metallischen Material in Form einer Spule hergestellt ist, deren eines Ende mit dem Zapfmodul (112) verbunden ist und deren anderes Ende mit mindestens einer der mehreren Getränkebereitstellungsdosen verbunden ist;
ein erstes Kühlrohr (122) in Form einer Spule, das dazu konfiguriert ist, das Kühlwasser (111) zu kühlen; und
ein zweites Kühlrohr (123) in Form eines geraden Rohrs, das mit dem ersten Kühlrohr verbunden ist,
wobei das Getränkebereitstellungsrohr (135) und das Originalwasserkühlrohr (143) entweder auf einer inneren oder auf einer äußeren Seite des ersten und des zweiten Kühlrohrs (122) (123) angeordnet sind.

4. Apparat nach Anspruch 1, wobei der Sterilisierungswasserbereitstellungsanschluss (300) so angeordnet ist, dass er auf einer äußeren Seite des Sterilisierungsmoduls (140) freiliegt.

5. Apparat nach Anspruch 4, wobei der Sterilisierungswasserbereitstellungsanschluss (300) in derselben Form gebildet ist wie die Form eines Einlasses der Getränkebereitstellungsdose, die in dem Getränkelager (130) gelagert wird.

6. Apparat nach Anspruch 3, wobei das Getränkebereitstellungsrohr (135) unter Verwendung einer Getränkebereitstellungsröhre (133), die aus einem flexiblen Material hergestellt ist, und eines Ausgabekopfs (200), der mit dem Einlass der Getränkebereitstellungsdose verbunden ist, mit der Getränkebereitstellungsdose verbunden ist.

7. Apparat nach Anspruch 6, wobei die Getränkebereitstellungsröhre (133) in Form einer Federröhre, die in Richtung einer Längsrichtung ausziehbar ist, gebildet ist.

8. Apparat nach Anspruch 6, wobei das Getränkelager (130) ferner eine Abdeckeinheit aufweist, die dazu konfiguriert ist, die Herausnahme der Getränkebereitstellungsröhre (133) und des Ausgabekopfs (200) zu ermöglichen.

9. Apparat nach Anspruch 1, wobei das Kühlwasser (111) aus Ozonsterilisierungswasser gebildet wird, das in dem Sterilisierungsmodul erzeugt wird.

10. Apparat nach Anspruch 1, wobei die Elektrolysiervorrichtung (141) ein Elektrodenmodul aufweist, und wobei das Elektrodenmodul Folgendes aufweist:
eine positive Elektrode, die dazu konfiguriert ist, eine Elektrolysereaktion in Wasser einzuleiten;
eine negative Elektrode, die dazu konfiguriert ist, eine Elektrolysereaktion in Wasser einzuleiten, indem sie gegenüber der positiven Elektrode angeordnet wird;
eine feste Polymerelektrolytmembran, die dazu konfiguriert ist, Wasserstoffionen freizusetzen, die durch die Elektrolysereaktion zwischen der positiven Elektrode und der negativen Elektrode erzeugt werden; und
eine Hilfselektrode, die dazu konfiguriert ist, das Erzeugen einer dünnen Schicht auf einer Oberfläche der negativen Elektrode zu verringern, indem sie zwischen der negativen Elektrode und der festen Polymerelektrolytmembran angeordnet ist und indem sie an der positiven Elektrode erzeugte Wasserstoffionen zu der negativen Elektrode leitet und erzeugte dünne Schichten erzeugt, wodurch an der negativen Elektrode erzeugte OH-Ionen mit zweiwertigen positiven Ionen an einer Oberfläche der Hilfselektrode reagieren.

## Revendications

1. Appareil d'alimentation en boisson (100) comprenant :
une unité de refroidissement de boisson (110) configurée pour stocker de l'eau de refroidissement (111) à l'intérieur de cette dernière ;
un logement d'unité de refroidissement (120) disposé sur une partie inférieure de l'unité de refroidissement de boisson (110), dans lequel un dispositif de refroidissement (121) est installé dans le logement (120) ;
un dispositif de stockage de boisson (130) configuré pour stocker une pluralité de bidons d'alimentation en boisson (131, 132) ;
un module de stérilisation (140) formé dans une zone sèche disposée sur une partie supérieure de l'unité de refroidissement de boisson (110),
dans lequel l'unité de refroidissement de boisson (110), le logement d'unité de refroidissement (120), le dispositif de stockage de boisson (130) et le module de stérilisation (140) sont chacun installés en ayant une structure indépendante et peuvent être détachés les uns des autres et
dans lequel le module de stérilisation (140) comprend :
un dispositif d'électrolysation (141) ;
un orifice d'alimentation en eau brute (142) configuré pour alimenter en eau brute le dispositif d'électrolysation (141) ;
un tuyau de refroidissement d'eau brute (143) positionné dans l'eau de refroidissement (111) de l'unité de refroidissement de boisson (110) réalisé en un matériau métallique sous la forme d'une bobine, ayant une de ses extrémités raccordée à l'orifice d'alimentation en eau brute (142) et une autre de ses extrémités raccordée au dispositif d'électrolysation (141) ;
un tuyau d'alimentation en eau de stérilisation (144) configuré pour expulser l'eau de stérilisation générée dans le dispositif d'électrolysation (141) ;
un élément de valve (145) configuré pour être divisé en un premier trajet d'écoulement et un second trajet d'écoulement, une première extrémité du premier trajet d'écoulement étant raccordée au tuyau d'alimentation en eau de stérilisation (144) et une autre extrémité du premier trajet d'écoulement étant raccordée à un orifice de sortie d'eau de stérilisation (146) configuré pour injecter de l'eau de stérilisation dans l'unité de refroidissement de boisson (110) destinée à être utilisée comme eau de refroidissement (111), et le second trajet d'écoulement étant raccordé à l'orifice d'alimentation en eau de stérilisation (300) pour un raccordement à un tuyau d'alimentation en boisson (135).

2. Appareil selon la revendication 1, dans lequel l'unité de refroidissement de boisson (110) comprend :
un module de robinet (112) configuré pour fournir une boisson contenue dans le bidon d'alimentation en boisson ;
un élément d'isolation thermique (113) intercalé entre une chambre interne configurée pour stocker l'eau de refroidissement (111) à l'intérieur de cette dernière et un boîtier externe positionné à l'extérieur de la chambre interne ;
un capteur de niveau d'eau (115) configuré pour détecter le niveau d'eau de l'eau de refroidissement (111) ;
un orifice d'évacuation (117) configuré pour expulser l'eau de refroidissement (111),
dans lequel l'orifice d'alimentation en eau de stérilisation (300) et l'orifice d'évacuation (117) sont commandés pour s'ouvrir à l'aide d'un signal de commande provenant d'un dispositif de commande et un espace inférieur du capteur de niveau d'eau (115) est toujours rempli d'eau de refroidissement (111).

3. Appareil selon la revendication 2, dans lequel l'unité de refroidissement de boisson (110) comprend :
un tuyau d'alimentation en boisson (135) réalisé en un matériau métallique sous la forme d'une bobine, ayant une de ses extrémités raccordée au module de robinet (112) et une autre de ses extrémités raccordée à au moins un bidon d'alimentation en boisson de la pluralité de bidons d'alimentation en boisson ;
un premier tuyau de fluide frigorigène (122) sous la forme d'une bobine et configuré pour refroidir l'eau de refroidissement (111) ; et
un second tuyau de fluide frigorigène (123) sous la forme d'un tuyau droit et raccordé au premier tuyau de fluide frigorigène,
dans lequel le tuyau d'alimentation en boisson (135) et le tuyau de refroidissement d'eau brute (143) sont disposés soit sur un côté interne, soit sur un côté externe des premier (122) et second (123) tuyaux de fluide frigorigène.

4. Appareil selon la revendication 1, dans lequel l'orifice d'alimentation en eau de stérilisation (300) est disposé en étant exposé sur un coté externe du module de stérilisation (140).

5. Appareil selon la revendication 4, dans lequel l'orifice d'alimentation en eau de stérilisation (300) est façonné sous une même forme que la forme d'un orifice d'entrée du bidon d'alimentation en boisson dans le dispositif de stockage de boisson (130).

6. Appareil selon la revendication 3, dans lequel
le tuyau d'alimentation en boisson (135) est raccordé au bidon d'alimentation en boisson à l'aide d'un tuyau d'alimentation en boisson (133) réalisé en un matériau flexible et d'une tête de distribution (200) à un orifice d'entrée du bidon d'alimentation en boisson.

7. Appareil selon la revendication 6, dans lequel
le tuyau d'alimentation en boisson (135) est façonné en une forme de tube ressort extensible dans le sens de la longueur.

8. Appareil selon la revendication 6, dans lequel
le dispositif de stockage de boisson (130) comprend en outre une unité de couvercle configurée pour permettre au tuyau d'alimentation en boisson (133) et à la tête de distribution (200) d'être sortis.

9. Appareil selon la revendication 1, dans lequel
l'eau de refroidissement (111) est composée d'une eau de stérilisation à l'ozone générée dans le module de stérilisation.

10. Appareil selon la revendication 1, dans lequel
le dispositif d'électrolysation (141) comprend un module d'électrode et
dans lequel le module d'électrode comprend :
une électrode positive configurée pour provoquer une réponse à l'électrolyse dans de l'eau ;
une électrode négative configurée pour provoquer une réponse à l'électrolyse dans de l'eau, en étant disposée de sorte à être opposée à l'électrode positive ;
une membrane à électrolyte polymère solide configurée pour délivrer des ions hydrogène générés par la réponse à l'électrolyse entre l'électrode positive et l'électrode négative ; et
une électrode auxiliaire configurée pour réduire une production de tartre sur une surface de l'électrode négative en étant disposée entre l'électrode négative et la membrane à électrolyte polymère solide et en laissant passer des ions hydrogène générés au niveau de l'électrode positive vers l'électrode négative et en produisant du tartre produit de telle sorte que des ions OH générés au niveau de l'électrode négative réagissent avec des ions positifs divalents sur une surface de l'électrode auxiliaire.
